# EUROPEAN PATENT APPLICATION

(11) **EP 1 901 518 A2**
(43) Date of publication of application: **19.03.2008**
(21) Application number: 06077272.0
(22) Date of filing: 18.12.2006
(51) Int. Cl.: H04L 29/06

(54) **Dynamic communication line assignment**

(30) Priority: 19.08.2006 US 822931 P
(71) Applicant: Benalclaf, S.L., 29780 Nerja - Málaga (ES)
(72) Inventor: Merino Gonzalez, Jose Luis, 29780 Nerja (Malaga) (ES); Sanchez Calvo, Pablo, 28020 Madrid (ES)
(74) Representative: Manzano Cantos, Gregorio

(57) **Abstract**

An internet device (ID), which has at least one or more build-in proprietary dynamic line assignment (PDLA), and with at least one or more user accessible input interfaces, more commonly referred to as an internet protocol (IP) address or web-site address or uniform resource locator (URL), whereas the PDLA is capable of detecting any single or simultaneously with any multiple inbound communications request and communicate with any single or simultaneously with any such multiple device(s), whereas such device(s) is/are capable of accessing the PDLA internet web pages referred to as proprietary dynamic line assignment web pages (PDLAWP), be it a fixed device (FD), desktop or portable computer (PC), wireless device (WD), voice over internet protocol device (VoIPD) or any such other device capable of communicating through or connected to an internet service provider (ISP) or to an internet device (ID) or to a public access network (PAN) or to a wireless network (WN) or to a public/private switching exchange/centre (SWITCH), The PDLA is also capable of identifying any such previous mentioned individual device user and capable of rejecting such communications request if it is not authorised or recognised as an authorised user of the PDLA functions.

Once a device user is authenticated by the PDLA as an authorised user, then the PDLA will detect the inbound communications protocol and communicate with it, through its at least one or more input & output interfaces, and also the PDLA will convert the device user PDLA inbound communications protocol requests, commands and parameters settings to the PDLA outbound communications protocol(s) as to allow the PDLA to interface and communicate with each the corresponding user account(s), be such user account(s) residing in a ID, ISP, SWITCH or any such other device connected to the internet or public access network.

Such previous mentioned ID or ISP or SWITCH has a call forwarding and/or call divert function that includes forwarding any of the:
- SWITCH specific and individual call-in telephone line(s) to any other telephone number and capable of detecting and the PDLA and/or SWITCH identifying any free and occupied SWITCH call-in telephone line number or alternatively such SWITCH with one or more build-in proprietary dynamic line assignment (PDLA) function accessible by the build-in or remote PDLAWP.
- ISP specific and individual call-in telephone line(s), associated to a specific ISP user account/name, to any other ISP user account/name and capable of detecting and the PDLA and/or ISP identifying any free and occupied ISP call-in telephone line number or alternatively such ISP with one or more build-in proprietary dynamic line assignment (PDLA) function accessible by the build-in or remote PDLAWP.

## Description

### FIELD OF THE INVENTION

This invention relates in general terms to fixed telephone network operators and internet service providers, for any users making calls to such operators or service providers, be they desktop or portable computers and/or voice over internet protocol devices and/or wireless devices and/or fixed devices, in particular a "proprietary dynamic line assignment" method and architecture(s) specifically for call(s) routing, or calls forwarding or calls divert, towards any "fixed or mobile telephone number" and/or "voice over internet protocol users", applicable to users of any device(s) that can access the internet which have an associated "proprietary dynamic line assignment" (PDLA) and/or "internet service provider" user account with dynamically assignable call-in telephone number(s) or with at least one or more account specific call-in telephone number and call forwarding or call divert function to any "fixed or mobile telephone number" and/or to any and all of its corresponding "internet service provider users or voice over internet protocol uisers", whereas such call forwarding or call divert function may be performed by a PDLA and "proprietary dynamic line assignment web pages" (PDLAWP) and a SWITCH, "internet device" and/or "internet service provider" for each of their individual call-in telephone numbers and/or accounts, and more specifically to a method for interfacing and/or interconnecting and communicating such "proprietary dynamic line assignment" with a build-in "proprietary dynamic line assignment web pages" with any desktop or portable computer, voice over internet protocol device and wireless device, capable of interconnecting and communicating through or with the internet and through a "proprietary dynamic line assignment" with a build-in or remotely connected "proprietary dynamic line assignment web pages" with any one or more SWITCH, "internet device" and/or "internet service provider".

### BACKGROUND OF THE INVENTION

Currently most or all public and private switching networks (WN and FN) and private automatic branch exchange (PABX or PBX) can now handle voice and/or data allowing simplex and/or duplex calls routing for voice calls, video calls and some even data calls such as open standard or proprietary VoIP (proprietary voice over internet protocol) calls. Some smaller calls router versions devices for private and small businesses can now handle calls routing between public switched telephone networks with or without the use of voice over internet protocol (VoIP), however when for personal use often with the requirement of a personal desktop or portable computer (PC) permanently connected to the internet or in some cases even requiring additional hardware calls router devices (HWCRD) connected between the PC and PSTN (fixed telephone land-line), typically interconnecting such additional HWCRD and PC with their corresponding universal serial bus (USB) interface or in some other cases where such HWCRD is basically a wireless device (WD) or mobile phone interconnecting and communicating with the PC through Wifi or Bluetooth whereas such WD has to be within a range of approximately 100 meters or less from the PC, mainly in order to run a third party or in-house proprietary VoIP application and to allow interfacing and in some cases even to power through such HWCRD. Yet in other more commonly mass market used available technologies the calls routing is strictly interfaced by a PC permanently connected to the home internet access, whereas such PC runs a third party or in-house proprietary VoIP application, allowing incoming voice calls from and to external hardware device connected through their USB with previously mentioned PC, which has to be permanently logged onto a internet service provider user account from an internet service provider and permanently switched-on, meaning connected to the mains power supply, typically in a private home or small office environment.

Such previously different types of calls routers, jointly referred to hereinafter as CR, require the originating call party, in example a wireless device user, that wishes to be routed through to fixed or wireless telephone user, has to originate the call manually from a wireless device or mobile phone, fixed phone by calling the CR telephone number associated to its connected PSTN and then when in voice call follow pre-recorded voice instructions from the CR as to enter each time manually a security code and then the VoIP user telephone number short dial or any such other PSTN phone number or wireless device phone number that it wishes to talk to and the same applies vice-versa, meaning in example when a VoIP user calls from a VoIP device to the phone number associated with the PSTN connected to the CR, then when in call the VoIP user has to select manually the outgoing calls function check that it his has sufficient credit and then, following the CR instructions, the user has to enter the phone number to whom it wishes to be routed through by the CR. In many aspects limiting the actual use of such systems to the more sophisticated or technology savvy users with no sufficient security provisions for abuse of these calls router systems by unauthorised third parties and also a major drawback is that the user of such CR with an external HWCRD are typically connected in most cases to their home PSTN fixed telephone line, thus having this communication link used most of the time, not allowing simultaneous use say one user use the PSTN and another user, say of the same family, use his WD, because in previous existing systems it's the WD that calls its home PSTN to be call routed through the external hardware connected to its home computer that has to be permanently connected to the mains power supply and permanently logged on to an internet service provider user account as to allow permanently to run a required application for such calls routing function.

In view of these technological advances, particularly in fixed telephony switching centres, internet server devices and the handheld battery powered wireless devices and the home personal computers and wireless broadband internet access availability in general, what is needed is a method that allows strictly only authorised users, in particular even for those users who have no home fixed telephone line (PSTN) connection however who do have any wireless device (WD) capable of connecting to the internet at even the lowest bit-rates and wireless coverage from a any Wireless Network (WN) to which the (WD) is subscribed to or to which the WD is roaming abroad as outlined in this invention and thus in particular allowing each authorised user of this invention the freedom to choose, no matter where they are in the world, in particular users with a user account accessible though the internet, to call any internet service provider user in the world without the need of having his own personal fixed home PSTN (phone line) nor a home computer, when it wishes to make outgoing calls or communications, in particular from any wireless device capable of accessing the internet. Also any such WD users will be able to make calls to any fixed and mobile telephone number from his WD routed through a SWITCH once such call routing was set through an internet connection with a server as per this invention. As wireless coverage by cellular networks is available almost world-wide and the use of mobile phones penetration has reached substantially percentage value, and in some geographies even outstripping the penetration percentage of fixed phone users, the present invention addresses a real need and demand of particularly the mobile handset phones users to be able to make outgoing calls from their mobile phones, with mobile overage and a valid subscriber identity module subscription (SIM), at any time in any place, calling to any place in the world, to any voice over internet protocol user of any internet service provider, at the worst case at the cost only one- local call rate or even free of charge in some cases depending on his WN tariff plan when calling to a toll-free call-in telephone number of a SWITCH, without having the need to leave their home computer permanently switch on or permanently running any applications, and by using its wireless device or mobile phone in the same way the user used it always before as described through the benefits of this invention. The previous may also apply instead of calling any voice over internet users (VoIP user) to calling any telephone number. The wireless devices or mobile phone users do not require to download any application whatsoever into its wireless device or mobile phone, but simply by using the method(s) and/or architecture(s) and/or claims as described in this invention applied for a single or a multitude of users and thus using all the benefits, as described within this invention.

### References Cited:

"Catalyst Management - Private Mobile Network"; The Product - How it works. Within many Universities, both students and staff prefer the convenience of a mobile phone over a fixed line telephone handset, and continue to make calls from their mobile, even when there is a fixed line handset available. A Private Mobile Network (PMN) or Private Mobile Exchange (PMX) enables mobile phones to become part of a Local area voice network while in the vicinity of the campus. Mobile phones can now be used to make calls from campus for the same cost as calling from an internal telephone extension. Downloaded from http://www.catalystmanagement.co.uk/pdfs/Catalyst%20Private%20Mobile%20N etwork%20Data%20Sheets.pdf, on 6 August 2006.

"Fixed-Mobile Convergence"; Cover Story, July 2006, Vol.4 Issue 7, Page(s) 42-44 in print issue; Your mobile phone rings as you're pulling into the office. You answer it, park your car, and continue your conversation as you walk into the building. Its brick facade blocks cellular signals, but you're not worried. When call quality starts to deteriorate, your phone will search for an alternate WLAN signal-and find it in your office's broadband Internet connection. You can continue your call unimpeded. Downloaded from http://www.pctoday.com/Editorial/article.asp?article=articles/2006/t0407/13t07/1 3t07.asp&guid= , on 6 August 2006.

"Tapping the Potential of Roaming"; GSM is founded on the concept of roaming - allowing customers from other networks and countries to use their mobiles when they visit any country or network. Sounds simple. But with some 600+ GSM networks now operational, the GSM Association estimates that more than 20,000 individual roaming agreements are in place between its operators, with more being added every day. So behind the simple objective of global roaming lies a complex process that gathers information about each call, about each caller and takes a standardised approach to the charges being incurred. In this article Christer Gullstrand, Chair of the GSM Association's Transferred Account Data Interchange group (TADIG) examines TAP - the Transferred Account Procedure - that lies at the heart of roaming billing as the world standard for billing of roaming services, looking at how it was developed, at its current applications and reviewing its future. Downloaded from http://www.gsmworld.com/usinglbillinglpotentia1.shtml , on on 6 August 2006.

"Comission for Comunications regulations"; "Industry For a": Measuring Licensed Operator Performance Forum (MLOP). ComReg established and chairs the Measuring Licensed Operator Performance (MLOP) forum where licensed fixed-line operators are invited to participate in the design and infrastructure of a comparable measurement reporting process that is supported by regulator controlled definitions and audit requirements. The quality of service performance data collected through this reporting process is published by ComReg on a biannual basis. Since February 2000, ComReg has hosted regular meetings and reached agreements with the participating operators. Downloaded from http://www.comreg.ie/sector/default.asp?S=4&id=&q=&navid=53&sTV4=IFR& TV4Exp=Y#100094, on 6 August 2006.

"Europa search results": Downloaded from "http://ec.europa.eu/geninfo/query/resultaction.jsp", on 6 August 2006. The results retrieved do not include the official documents from EUR-Lex. To search for these, please use the EUR-Lex search engine: Showing results 1 through 10 of 200 returned. Your search on "fixed telephony" matched 795 of 290615 documents: Search nr 3. "Public fixed telephony services" 35Kb PDF file; 170 4.3.3 - CASE STUDIES: FEES FOR A NEW ENTRANT AT NATIONAL LEVEL 4.3.3.1. PUBLIC FIXED VOICE TELEPHONY (not including operation of the network) This case analyses the actual costs a new entrant has to pay in order to provide public voice telephony service (not including the installation, operation and control of the underlying network) at national level. Administrative fees The national licensing regimes and fees are those described in Table 5 and 6.

"Fixed Telephony Services in Western Europe, Forecast and Analysis, 2003-2008; Pub Time: 2005/01, Published by IDC"; Abstract: Revenues from voice telephony are now declining in most European countries. IDC estimates that the European fixed-voice market will decline from $108 billion in 2003 to $95 billion by 2008, which is a compound annual growth rate of -3%. "With the total market declining, service providers have entered a fierce battle for market share," reports Jill Finger Gibson, research director, European Fixed-Voice Services. "However, this can only be a short-term strategy: in the longer term, voice service providers will need to think seriously about the viability of offering traditional fixed-voice services at all." Downloaded from http://www.gii.co.jp/english/id27069 _fixed_telephony.html , on 6 August 2006.

"Google Talk", 1. What does Google Talk do? Google Talk is a downloadable Windows application that enables users to quickly and easily talk or send instant messages to their friends for free. Calls are made through your computer using the latest voice technology; all you need is an Internet connection, a microphone and a speaker. If you don't have a speaker or built-in microphone, you may want to consider buying a headset, which will also provide the best voice quality when using Google Talk. When you download and use Google Talk, you're actually connected to the group of users on the Google Talk network. Because Google Talk supports open standards, Google Talk users can also talk with users of other service providers that support open standards. So you can talk with more people, and not just ones who download Google Talk. We're hoping the list of service providers that support open standards will continue to grow, and that more and more users around the world will be able to talk to each other while still getting to use the service of their choice. 2. Who and where can I call? How long can I talk for? Is it really free? Once your friends download Google Talk, you can talk to them anytime they're online. They can be anywhere in the world, and you can talk for as long as you want. Oh yes, and it's free.. Downloaded from http://wvvw.google.com/talk/about.html, on 12 July 2006.

"Yahoo Messanger". Make Cheap PC-to-Phone Calls*. Make free worldwide PC-to-PC calls. Plus call regular or mobile phones in the U.S. or in 30+ countries for 2¢/min. Make Free PC-to-PC Calls*. All you need is a headset, or a microphone and speakers. It's that easy - just click the Call button. IM with friends on Windows Live (MSN) Messenger**. Have all your IM friends in one place. Ping-away with people who use Windows Live (MSN) Messenger. They'll also be on your contact list so you can see when they're online. Attention developers! Find out how to create your own plug-in for the Yahoo! Messenger community. Make PC-to-Phone calls to regular and mobile phones with the Yahoo! Phone Out service. Rates start at 1¢ per minute (and are just 2¢ per minute within the U.S. and to over 30 countries). Receive calls on your computer from friends using regular or mobile phones. With the Yahoo! Phone In service, you can choose a phone number for your PC from many countries and areas. Downloaded from http://messenger.yahoo.com/ on 12 July 2006.

"SpeedDial for Skype streamlines VOIP"; Monday, June 5th 2006: NHANDZ has released SpeedDial for Skype, which works with the popular VOIP service, Skype (owned by eBay), allowing users to use Skype remotely, away from their Macs. SpeedDial lets consumers create keyboard shortcuts or "hotkeys" for making, answering and hanging up calls using only a keyboard. SpeedDial offers built-in speed dial settings for answering and hanging up calls, and a simple interface to automatically create speed dials for anyone on their Skype contact list or to add new speed dial contacts. SpeedDial for Skype is the latest VOIP offering by NHANDZ, promoting remote/mobile use of Skype while in the home, following previous Mac OS X and Windows PC releases of Speakables for Skype voice recognition software. Downloaded from http://www.macnn.com/articles/06/06/05/speeddial.for.skype/ on August 7, 2006

"SKYPE", What is Skype? Skype is a little piece of software that lets you make free calls to anyone else on Skype, anywhere in the world. And even though the calls are free, they are really excellent quality. If you and your friends, family or business contacts are using webcams, you can also make free video calls. You can even call landlines and mobile phones at really cheap per minute rates (and there's no set-up or subscription fee). Skype automatically encrypts calls, chats and file transfers before sending it through the internet so no-one can intercept your call, text or file transfer. And it's completely free of advertising, so you won't be disturbed by annoying pop-ups or banners. SkypeOut is the great, low-cost way to call landlines and mobiles direct from Skype. To make calls you'll need to purchase some Skype Credit - it starts from as little as € 10. SkypeIn is a number that lets you receive calls from landline and mobile phones on Skype. It is cheap and easy way for your family, friends and colleagues to call you at a local rate, no matter where you are.

Skype for Pocket PC. Skype on the go with Skype for Pocket PC. Make voice calls and chat for free, no matter where you are. It's easy to use and available when you connect to WiFi or 3G. Can I forward calls to this Skypeln number? Yes, you can forward a call to your Skypeln number as you would any other regular phone call. What is call forwarding? With call forwarding, you can redirect incoming Skype calls to another Skype Name, mobile or landline number. Downloaded from http://www.skype.com/download/ and http://support.skype.com/index.php on 12 July 2006.

Press Release: LAS VEGAS (2006 International CES, January 6, 2006): WORLD'S FIRST MOBILE SKYPE SOLUTION: VoSKY™ CALL CENTER, Make or Receive Skype Calls from Any Phone, Wherever You Are": http://www.actiontec.com/company_info/press/release010606.php
AND 1. Connect Call Center. Connect Call Center to a computer that is running Skype and to a phone line. 2. Dial Your Contact. From any phone, including mobile: Dial the phone number Call Center is connected to. Then dial your Skype or SkypeOut contact's number. 3. Enjoy Skype Anywhere. Call Center will connect you to your Skype or SkypeOut contact. Now you can enjoy Skype calls anywhere you are! http://www.vosky.com/product.php?pid=320 AND product sepcification:
http://www.vosky.com/product.php?pid=320&section=specifications respectively, downloaded on 26 March 2006.

"Epyx Mobile Internet Telephony": With EpyxMobile you can call Skype users all over the world from your mobile phone for (almost) free. What is more, you can also use SkypeOut! Depending on your mobile phone provider and your calling plan, your phone calls with EpyxMobile might be completely free. EpyxFree exposes a time limit on the length of the call. Should you find it useful, please consider upgrading to EpyxMobile Pro or Net. Bluetooth-enabled mobile phones: EpyxMobile is compatible with Bluetooth®-enabled mobile phones that support Handsfree Profile 1.1 and above. If your Widcomm stack can establish an Audio Gateway connection to it, EpyxMobile will be able to use it. Hardware Requirements: 1 Personal Computer (PC) with broadband Internet connection running Skype, 1 USB Bluetooth Receiver in case your computer is not already Bluetooth-enabled, 1 extra mobile phone (later referred to as your secondary mobile phone) with Bluetooth^{®} wireless technology. Software Requirements: The most recent version of Skype (1.3.0.57, July 8, 2005), The Widcomm (BroadCom) Bluetooth stack software, which comes with your USB Bluetooth Receiver, Windows XP or higher. Copyright 2005 Vendex International Ltd. Previous mentioned information from Vendex International Ltd accessed from http://www.epyxmobile.com/index.php?page=epyxfree on 12 July 2006

"Make free calls (landlines only) and get a free VoIP-In phone number": www.voipbuster.com, downloaded on 5 April 2006.

"Free phone calls all around the world. Free calls to any regular landline in": http://wrww.voipstunt.com/en/free.html AND "Canada-, China-, Hong-Kong-, Mexico-, Singapore-, Thailand-, United States- (Landline & Mobile) Super Deal! free And United Kingdom-, Belgium-, France-, Italy-, Spain-, Germany- etc. (Landline) SuperDeal! free": http://www.voipstunt.com/en/rates.html, downloaded on 7 April 2006.

"Internet Protocols", Chapter 30, page 30-1 to including page 30-16, Internetworking Technology Overview, June 1999; http://www.cisco.com/univercd/cc/td/doc/cisintwk/ito doc/ip.pdf, downloaded as a PDF file on 8 April 2006.

"INTERNET MULTICAST ADDRESSES:(last updated 31 March 2006): Host Extensions for IP Multicasting [RFC1112] specifies the extensions required of a host implementation of the Internet Protocol (IP) to support multicasting. http://www.iana.org/assignments/multicast-addresses, downloaded on 8 April 2006.

### DESCRIPTION OF THE DRAWINGS

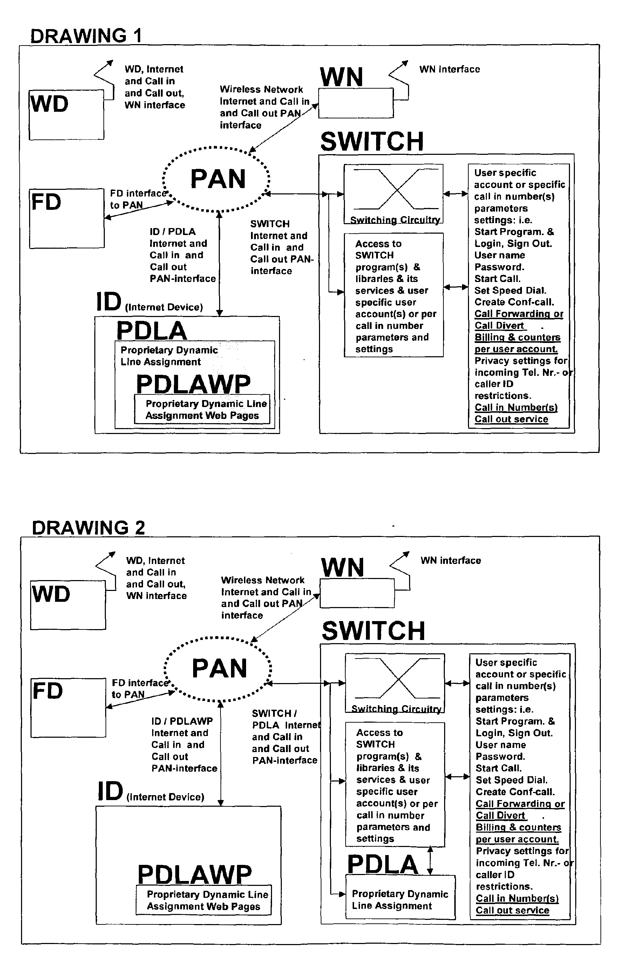

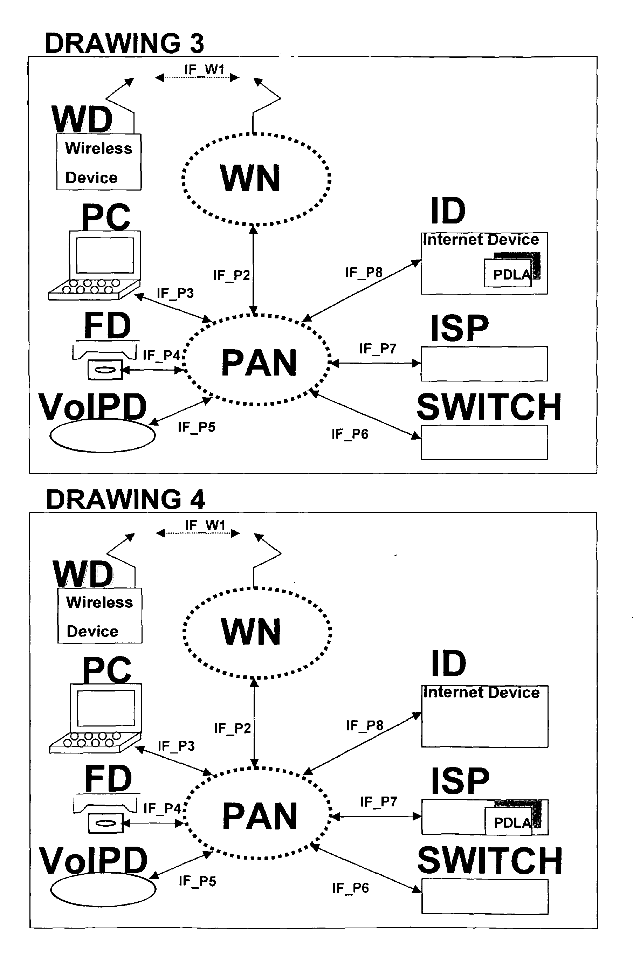

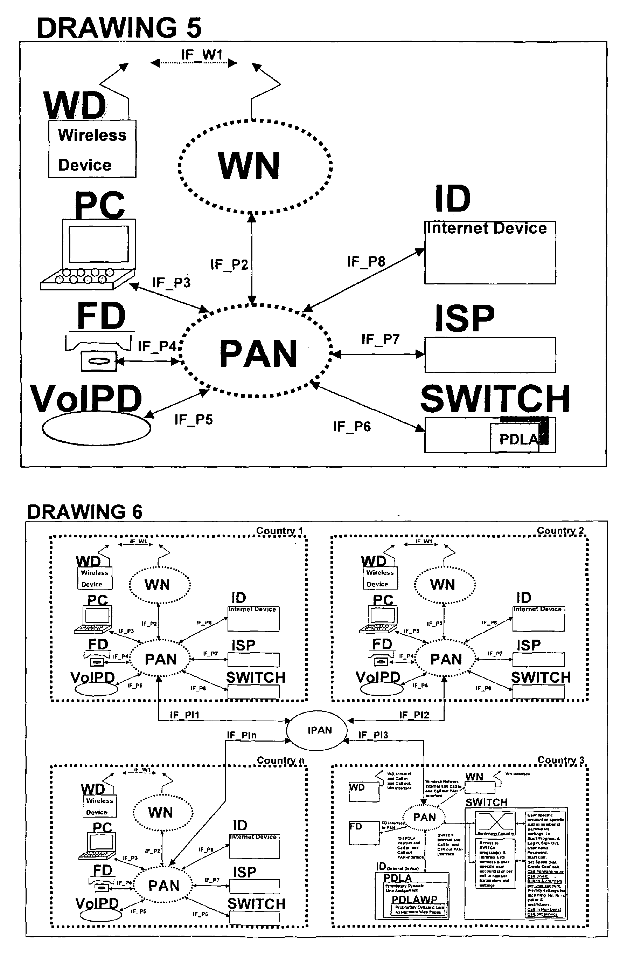

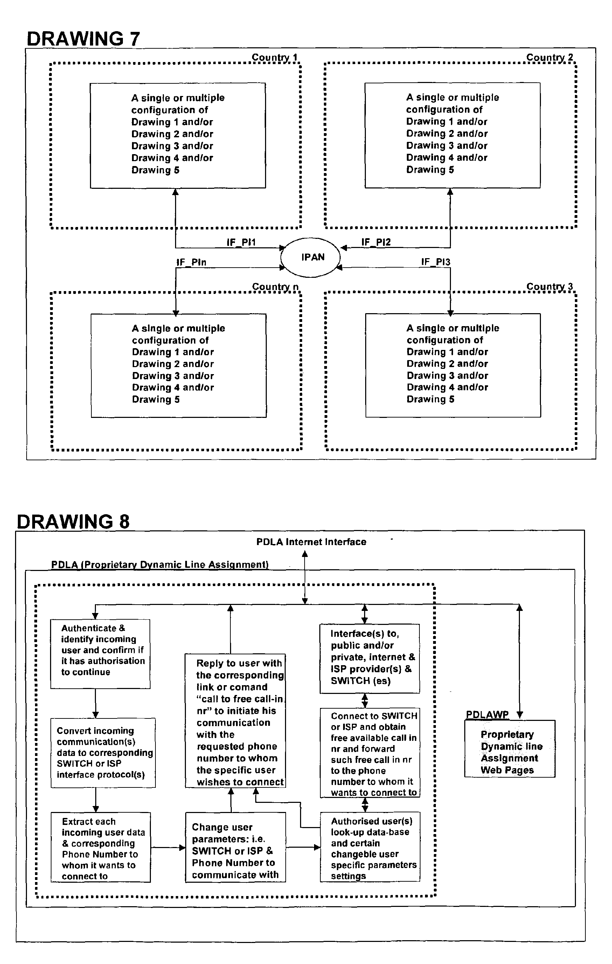

DRAWINGS 1 and 4 shows one example each of the embodiment of implementation and integration thereof of "proprietary dynamic line assignment" (PDLA) and "proprietary dynamic line assignment web pages" (PDLAWP), whereas such PDLAWP may be a sub part of or embedded into a PDLA as per Drawing 1, or accessible remotely as per Drawing 2, in accordance with the present invention and in particular of proprietary dynamic line assignment (PDLA) build-into an internet devices (ID) or a switching centre (SWITCH), respectively communicating through a PDLA/PDLAWP interface and/or ID interface and/or SWITCH interface, respectively through the public access network (PAN).

Whereas Drawing 1 in particular shows a method and architecture of the PDLA, and its build-in PDLAWP, within or build-into an internet device (ID), which is its most simple form may be an internet server, and a switching centre (SWITCH) which is capable of call forwarding or call divert any of its call-in telephone lines to any other "fixed and mobile telephone number" world-wide, whilst DRAWING 2 shows in particular a method and architecture where the PDLA is embedded inside or collocated with the SWITCH, whilst the PDLAWP is embedded inside an "internet device" (ID), whereas the PDLAWP is the internet interface for any call request (call forward or call divert) by any fixed and/or wireless device (WD).

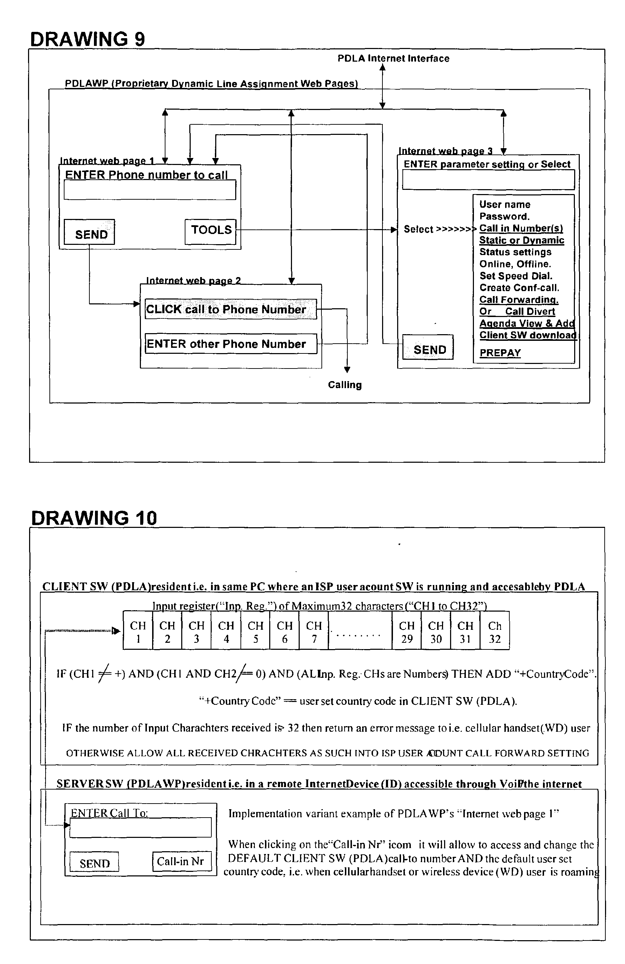

DRAWINGS 3, 4 and 5 are examples of the embodiment of implementations and combinations thereof in accordance with the present invention(s) with respect to some of the different switching centres (SWITCH), internet devices (ID), internet service providers (ISP), wireless networks (WN) and public access networks (PAN) architectures, and any such devices within such embodiments capable of accessing the internet and/or capable of making calls, such as desktop or portable computers (PC) and/or fixed devices (FD) associated with such PAN and/or SWITCH and/or ISP, voice over internet protocol devices (VoIPD) associated with such PAN and/or ID and/or ISP, wireless devices (WD) associated with such WN.

Whereas IF_W1 is a wireless interface between any WD and his corresponding WN, IF_P2 is a fixed and/or wireless interface between any such WN and the corresponding PAN, IF_P3 is a fixed and/or wireless interface between any such PC and the corresponding PAN, IF_P4 is a fixed and/or wireless interface between any such FD and the corresponding PAN, IF_P5 is a fixed and/or wireless interface between any such VoIPD and the corresponding PAN, IF_P6 is a fixed and/or wireless interface between any such SWITCH and the corresponding PAN, IF_P7 is a fixed and/or wireless interface between any such ISP and the corresponding PAN, IF_P8 is a fixed and/or wireless interface between any such ID and the corresponding PAN, and whereas the PDLA is capable of connecting and communicating with any authorised FD, WD, PC, ID, ISP, SWITCH and whereas SWITCH and/or ISP is capable of call forwarding or call diverting its call-in telephone numbers to any other telephone numbers and/or any other VoIP ISP user name respectively.

Whereas the PDLA, with an embedded or remotely accessible PDLAWP; may be build-into an ID, as shown in Drawing 3 and/or build-into an ISP, as shown in Drawing 4 and/or build-into a SWITCH, as shown in Drawing 5 and/or regardless of the drawings herein the PDLA, with an embedded or remotely accessible PDLAWP, may be build-into a VoIPD or PC.

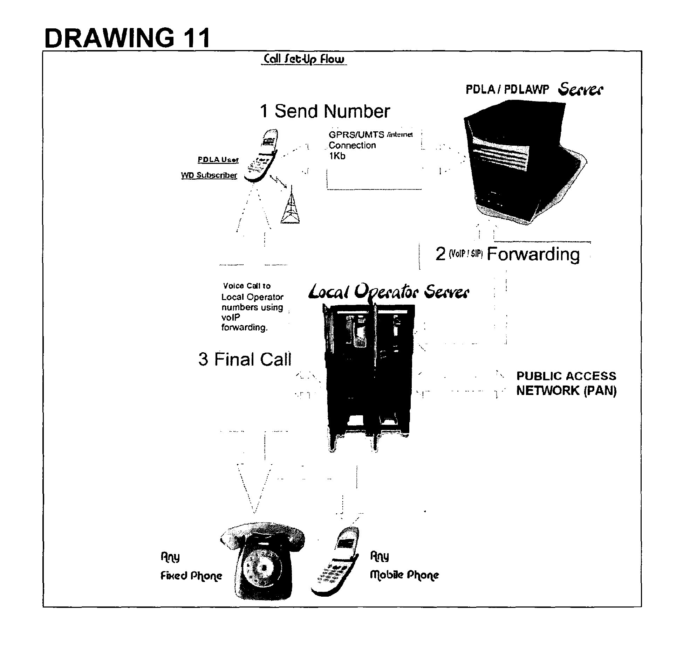

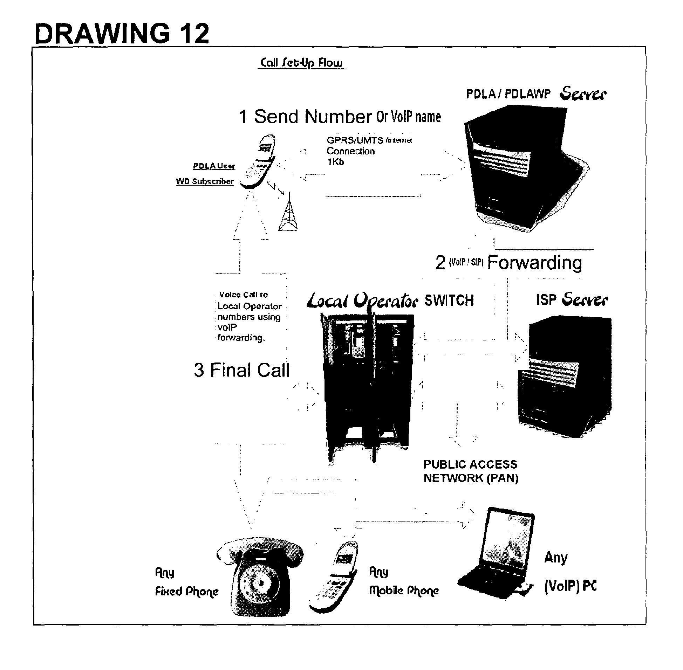

DRAWINGS 6 and 7 show two examples of the embodiment of implementation, integration and some of the different combinations thereof in accordance with the present invention with respect to the "proprietary dynamic line assignment" (PDLA), with a build-in or remotely accessible "proprietary dynamic line assignment web pages" (PDLAWP), within the scope of a multi country or region architecture or implementation, and whereas the PDLA and/or PDLAWP may consist of any single or multiple combination thereof or an equivalent of each such function or addition performing a similar function within the overall method of this invention, without limiting any such other ways of implementing the PDLA and/or PDLAWP and its overall architectures and methods as described within the claims of this invention.

DRAWINGS 8, 9 and 10 show each one example of the embodiment of implementation, integration and some of the different combinations thereof, respectively in accordance with the present invention with respect to the "proprietary dynamic line assignment" (PDLA) flowchart as shown in Drawing 8, and whereas the "proprietary dynamic line assignment web pages" (PDLAWP) are expanded exemplary as shown in Drawing 9, and whereas one of the possible variants of implementation or flowchart of the PDLA and PDLAWP is shown in Drawing 10

Whereas any embodiment of implementation, integration or flowchart of the PDLA and/or PDLAWP may consist of all of the shown sub-modules and/or sub-routines and/or sub-flowcharts and/or implementation examples or any single or multiple combination or addition thereof or an equivalent of each such sub-modules and/or sub-routines and/or sub-flowcharts and/or implementation examples or addition performing a similar function within the overall method of this invention, without limiting any such other ways of implementing the PDLA and/or PDLAWP as described within the claims of this invention.

DRAWINGS 11 and 12 are some examples of the embodiment of implementations and combinations thereof in accordance with the present invention(s) with respect to some of the different architectures comprising specifically;
- a PDLA and PDLAWP embedded in an internet device (ID) or (PDLA / PDLAWP Server) and an associated local fixed operator switching centres (Local Operator SWITCH), in particular as shown in Drawing 11 and as described in claim 8 herein,
- and a PDLA and PDLAWP embedded in an internet device (ID) or (PDLA / PDLAWP Server) and an associated local fixed operator switching centres (Local Operator SWITCH) and users associated internet service provider server (ISP server), in particular as shown in Drawing 12 and as described in claim 9 herein,
- whereas any embodiment of implementation, integration or architecture which includes the PDLA and/or PDLAWP may consist of all of the shown diagrams and/or implementation examples or any single or multiple combination or addition thereof or an equivalent of each such diagrams and/or implementation examples or addition performing a similar function within the overall method of this invention, without limiting any such other ways of implementing the PDLA and/or PDLAWP or any such other descriptions herein as described within the claims of this invention.

One of the preferred embodiments of the present invention and its advantages are best understood by referring to DRAWING 11. Essentially, in accordance with an embodiment of the present invention, a in particular a "proprietary dynamic line assignment" method and architecture(s) specifically for call(s) routing, or calls forwarding or calls divert, towards any "fixed or mobile telephone number", applicable to users of any device(s) that can access the internet which have an associated "proprietary dynamic line assignment" (PDLA) and/or "switching centre" (SWITCH) with dynamically assignable call-in telephone number(s) or with at least one or more PDLA user account specific call-in telephone number and call forwarding or call divert function to any "fixed or mobile telephone number", whereas such call forwarding or call divert function may be performed by a PDLA and "proprietary dynamic line assignment web pages" (PDLAWP) and a SWITCH, for each of the SWITCH individual call-in telephone numbers and/or accounts, and more specifically to a method for interfacing and/or interconnecting and communicating such "proprietary dynamic line assignment" (PDLA) with a build-in "proprietary dynamic line assignment web pages" (PDLAWP) with any desktop or portable computer, voice over internet protocol device and "wireless device" (WD), capable of interconnecting and communicating through or with the internet and through a "proprietary dynamic line assignment" with a build-in or remotely connected "proprietary dynamic line assignment web pages" with any one or more SWITCH.

As a way of illustration of such benefits of the present invention, referring to DRAWING 11, let's make the following assumptions or considerations:
- (i) SWITCH has the capability of incoming call forwarding or call divert function to any fixed and mobile telephone number in the world, and SWITCH is capable of communicating with the "proprietary dynamic line assignment" (PDLA) at least the following, SWITCH communicates to PDLA the caller identification number of incoming calling parties and the time in call per SWITCH call diverted connection.
- (ii) PDLA has the capability of interacting with a build-in or remotely accessible PDLAWP, and PDLA is capable of communicating with the SWITCH at least the following, PDLA communicates to SWITCH the caller identification number to whom the SWITCH has to call divert or call forward one of each specific SWITCH call-in telephone line number.
- (iii) an individual user authorised to use the functions of the PDLA as "USER 1" and whereas USER 1 has a subscription with a wireless network (WN), and is the user of a WD capable of accessing the internet (WD USER 1).

Considering the previous assumptions, (i), (ii) and (iii), for this next example, then at first one off the "WD USER 1" will connect to the internet, by any means available, be such connection protocol Doma, Fomu, TDMA, WTDMA, GPRS, UMTS, CSD, EDGE, WIFi, WiMax or any such other WD means of connecting to and communicating through the internet, and basically will connect to the "internet protocol address" (IP address) or also referred to as "Uniform Resource Locator" (URL) of the PDLAWP and/or PDLA, in example (i.e.) "internet web page 1" as shown in DRAWING 9, whereas the interface protocol of the PDLA, with a build-in PDLAWP, may be but is not limited to chtml, htmb basic, x html, wml, WAP 2.0 or any such other variants thereof or different interface protocols. Consequently "WD USER 1" will enter a specific "telephone number", say i.e. "0012345678", whereas such telephone number can be formed of any length of characters and as a combination of any characters, be they letters and/or numbers and/or symbols as can be seen in Drawing 10, and then the WD USER 1 will hit the send icon. Then the PDLA will communicate with the SWITCH and set the corresponding SWITCH call-in telephone number (say i.e. "CALL IN 1") call forward or call divert function to "0012345678" and then reply to "WD USER 1" with i.e. "internet web page 2", as shown in DRWAING 9. The "WD USER 1" simply has to click on the icon exemplary referred to in DRAWING 9 as "Click call to phone number" or in this specific example "Click call to 0012345678", and then the WD of "WD USER 1" will recognise automatically the so called "Call to" function or command from the PDLA/PDLAWP and then the WD of "WD USER 1" will initiate an outgoing call to "CALL IN 1", however in some WD the WD may request the "WD USER 1" for an acknowledgement to initiate the call automatically to "CALL IN 1", and then the "WD USER 1" will connect and communicate with "0012345678". If such "CALL IN 1" is i.e. a SIP call-in telephone line and "WD USER 1" and ""0012345678"" have a voice/video capability then the previous mentioned call, which was call forwarded or sometimes also referred to as call diverted by the PDLA/PDLAWP/SWITCH to "0012345678", could be a voice/video call.

Another of the preferred embodiments of the present invention and its advantages are best understood by referring to DRAWING 12. Essentially, identical as described hereinabove and additionally in accordance with an embodiment of the present invention, a a "proprietary dynamic line assignment" method and architecture(s) specifically for call(s) routing, or calls forwarding or calls divert, towards any "voice over internet protocol user name or user account" (VoIP User), applicable to users of any device(s) that can access the internet which have an associated "proprietary dynamic line assignment" (PDLA) and/or "switching center" (SWITCH) and/or "internet service provider" (ISP" with dynamically assignable call-in telephone number(s) or with at least one or more "PDLA user account" or "ISP user account" specific call-in telephone number and call forwarding or call divert function to any "fixed or mobile telephone number", whereas such call forwarding or call divert function may be performed by a PDLA and "proprietary dynamic line assignment web pages" (PDLAWP) and a SWITCH or ISP, for each of the SWITCH or ISP individual call-in telephone numbers and/or accounts, and more specifically to a method for interfacing and/or interconnecting and communicating such "proprietary dynamic line assignment" (PDLA) with a build-in "proprietary dynamic line assignment web pages" (PDLAWP) with any desktop or portable computer, voice over internet protocol device and "wireless device" (WD), capable of interconnecting and communicating through or with the internet and through a "proprietary dynamic line assignment" with a build-in or remotely connected "proprietary dynamic line assignment web pages" with any one or more SWITCH or ISP.

As a way of illustration of such benefits of the present invention, referring to DRAWING 12, let's make the following assumptions or considerations:
- (i) ISP has the capability of incoming call forwarding or call divert function to any of its "voice over internet protocol user name or user account" (VoIP User) in the world, and ISP is capable of communicating with the "proprietary dynamic line assignment" (PDLA) at least the following, ISP communicates to PDLA the call-in telephone number(s) associated to the corresponding "VoIP User account"..
- (ii) PDLA has the capability of interacting with a build-in or remotely accessible PDLAWP, and PDLA is capable of communicating with the ISP at least the following, PDLA communicates to ISP the "VoIP User" to whom the ISP has to call divert or call forward one of each ISP specific "VoIP User account" associated with the specific call-in telephone line number.
- (iii) an individual user authorised to use the functions of the PDLA as "USER 2" and whereas "USER 2" has a subscription with a wireless network (WN), and is the user of a WD capable of accessing the internet (WD USER 2).

Considering the previous assumptions, (i), (ii) and (iii), for this next example, then at first one off the "WD USER 2" will connect to the internet, by any means available, be such connection protocol Doma, Fomu, TDMA, WTDMA, GPRS, UMTS, CSD, EDGE, WIFi, WiMax or any such other WD means of connecting to and communicating through the internet, and basically will connect to the "internet protocol address" (IP address) or also referred to as "Uniform Resource Locator" (URL) of the PDLAWP and/or PDLA, in example (i.e.) "internet web page 1" as shown in DRAWING 9, whereas the interface protocol of the PDLA, with a build-in PDLAWP, may be but is not limited to chtml, htmb basic, x html, wml, WAP 2.0 or any such other variants thereof or different interface protocols.

Consequently "WD USER 2" will enter a specific "VoIP user" name of ISP, say i.e. "ISP USER AB9", whereas such VoIP user of ISP can be formed of any length of characters and as a combination of any characters, be they letters and/or numbers and/or symbols as per Drawing 10, and then the "WD USER 2" will hit the send icon. Then the PDLA/PDLAWP will log-into "WD User 2 ISP account" and set the incoming call forward function to "ISP USER AB9" and optionally set the "WD User 2 ISP account" status to "OFF LINE" and then log-out of such "WD User 2 ISP account" and then reply to "WD USER 2" with i.e. "internet web page 2", as shown in DRWAING 9. The "WD USER 2" now simply has to click on the icon exemplary referred to in DRAWING 9 as "Click call to phone number" or in this specific example it would show "Click call to "ISP USER AB9", and then the WD of "WD USER 2" will recognise automatically the so called "Call to" function or command from the PDLA/PDLAWP and then the WD of "WD USER 2" will initiate an outgoing call to "WD User 2 ISP account Call-in Telephone number", however in some WD the WD may request the "WD USER 2" for an acknowledgement to initiate the call automatically to "WD User 2 ISP account Call-in Telephone number", and then the "WD USER 2" will connect and communicate with "ISP USER AB9". If however such "WD User 2 ISP account Call-in Telephone number" is i.e. a SIP call-in telephone line and "WD USER 2" and "ISP USER AB9" have a voice/video capability then the previous mentioned call, which was call forwarded or sometimes also referred to as call diverted by the PDLA/PDLAWP/ISP to "ISP USER AB9", could be a voice/video call.

### SUMMARY OF THE INVENTION

It should be clear from the preceding disclosures that the present invention provides a "proprietary dynamic line assignment" method and architecture(s) specifically for call(s) routing, or calls forwarding or calls divert, towards any "fixed and mobile telephone number" and/or any "voice over internet protocol users", applicable to users of any device(s) that can access the internet which have an associated "internet device", "switching centre" and/or "internet service provider" user account respectively each with at least one or more account specific or dynamically assigned call-in telephone number and call forwarding or call divert function to any other "fixed and mobile telephone number" and/or any other of its corresponding "internet service provider users" respectively, whereas such call forwarding or call divert function may be performed by the PDLA/PDLAWP, "internet device" and/or "switching centre" and/or "internet service provider" for each of their call-in telephone lines and/or individual accounts. The principals, preferred embodiments and modes of operation of the present invention have been described in the foregoing claims, descriptions of implementations and drawings. This invention provides an advantage allowing specifically any wireless device, or any such other device capable of accessing the internet, to communicate with any other fixed and mobile telephone and/or any other "voice over internet protocol user" of any internet service provider through a "proprietary dynamic line assignment" (PDLA) and/or "proprietary dynamic line assignment web pages" (PDLAWP).

Specifically this invention provides an advantage allowing any wireless device, authorised to make use of the PDLA and/or PDLAWP functions and capable of connecting and communicating with the internet, to communicate with all associated switching centre (SWITCH) call-in phone numbers and being routed to any fixed and mobile telephone number, at the cost of a local call from the WD to a specific SWITCH call-in telephone number, or alternatively for free if the SWITCH call-in telephone numbers are free-phones, plus the cost of call divert connection cost from the SWITCH of that specific call diverted call-in telephone line to the third part telephone number the WD user wished to connect and communicate with. Which in essence means that the tariffs applicable are now those call termination charges for the regulated fixed telephony, in example at first off WD (wireless device) to landline telephone termination charge PLUS second off landline to landline or alternatively second off landline to mobile termination charges, instead of the termination charges that would be applicable if such WD call would have been routed through the wireless network tariffs which are in general higher for international calls but particularly much higher when roaming.

Moreover this invention provides an advantage allowing any wireless device, authorised to make use of the PDLA and/or PDLAWP functions and capable of connecting and communicating with the internet, to communicate with all associated internet service provider (ISP) specific users with whom the fixed or wireless devices users have an account with, thus be able to connect and communicate with all ISP VOIP users, meaning any user that is logged into his account on any PC or any other internet device anywhere in the world or if he is not logged in but has forwarded his incoming call to a voice mail then to his voice mail or if he has his incoming calls diverted or call forwarded to a telephone number, provided his ISP account has that facility, then to that telephone number or if he has his incoming calls diverted or call forwarded to another of his ISP user then to that ISP user.

This ability to interconnect any wireless device and PDLA, respectively controlled and interfaced by a PDLAWP and the associated switching centre (SWITCH) and/or internet service provider (ISP), is particularly advantageous for wireless devices international and roaming outgoing data and/or voice and/or video calls routing which currently are mostly restricted in the freedom of choice by their associated wireless networks, and which choice is now with this invention fully in the hand of the end user of any wireless device user, capable of accessing the internet even at very low bit-rates, by using the services provided by a PDLA and/or PDLAWP, which communicates with a SWITCH and/or an ISP, and whereas wireless networks typically only allow calls to any phone number or any "Uniform Resource Locator" (URL) but do not allow to actually call to any "ISP user or ISP user names", or choose their cheapest call route option when calling to "fixed and mobile telephone numbers" and with this present invention all fixed and particularly wireless device users will now be able to choose the call route for their calls to "fixed and mobile telephone numbers" and additionally be able to call to any associated "ISP user names or VoIP users" as described within this invention, thus being able to access hundreds of millions of VoiP users around the world which were not accessible to most wireless device users around the world, in particular to those wireless device users who make use of a so called cheaper or low to mid range wireless phones which form the bulk or majority of wireless devices or wireless phones or mobile phones of any available technology used around the world.

The implementation of this invention and any variations and improvement thereof, whereas the PDLA and/or the PDLAWP could reside in a SWITCH or ISP or the PDLAWP could reside in a secure internet server device (SISD) with duplicated server and power cut off protection back-up and the PDLA in an internet device (ID) or a public / business / private home desktop computer (PC) or switching centre (SWITCH) or internet service provider (ISP) or vice versa, or any combination thereof, are only some of the possible variants of architecture and implementation of the present invention.

Many modifications and variations of this present invention are possible in view of the above disclosures, drawings and explanations. Thus, it is to be understood that, within the scope of the appended claims, the invention can be practiced other than as specifically described herein above. The invention which is intended to be protected herein should not, however, be construed as limited to the particular forms disclosed, or implementation examples outlined, as these are to be regarded as illustrative rather than restrictive. Variations in changes could be made by those skilled in the art without deviating from the spirit of the invention. Accordingly, the foregoing detailed disclosures, descriptions and drawings should be considered exemplary in nature and not limited to the scope and spirit of the invention as set forth in the claims herein.

Method(s) and architecture(s) for dynamic line assignment.

## Claims

1. A method in a communications system consisting of a proprietary dynamic line assignment (PDLA), capable of communicating with one or more switching centre (SWITCH) and with any other device capable of communicating, with or through the internet, the method comprising the steps of:
- a method for interfacing and/or interconnecting and communicating any PDLA and/or proprietary dynamic line assignment web pages (PDLAWP) directly or through the internet with any such first of devices capable of communicating with or through the internet, with one or more yet different second of device(s) to the previous mentioned first of device(s), whereas each such second of device(s) can be identified and accessed by a unique phone numbering system.
- a method for interfacing and/or interconnecting and communicating one or more PDLA, directly or through the internet, with one or more switching centre (SWITCH).
- a method for interfacing and/or interconnecting and communicating one or more PDLA, with a build-in or remote PDLAWP, with any FD, WD, VoIPD, PC or any such other device capable of communicating with the proprietary dynamic line assignment web pages (PDLAWP) through the internet, through a public interface IF_P and/or IF_PI and/or wireless interface IF_W through a PAN and/or WN and/or ISP and/or ID and/or SWITCH.
- whereas PC to PCn are desktop and/or portable personal computer devices in any available current and future analogue and/or digital technologies respectively, capable of connecting with and communicating through the internet.
- whereas VoIPD to VoIPDn are fixed and/or wireless voice over internet protocol devices in any available current and future analogue and/or digital technologies respectively, capable of connecting with and communicating through the internet.
- whereas FD to FDn are fixed devices in any available current and future analogue and/or digital technologies respectively, capable of making and receiving calls.
- whereas WD to WDn are wireless devices and/or wireless battery powered handheld devices in any available current and future analogue and/or digital technologies respectively, capable of connecting with and communicating through the internet and capable of making and receiving calls.
- whereas ID to IDn are fixed internet devices and/or server devices in any available current and future analogue and/or digital technologies respectively, capable of connecting with and communicating through the internet.
- whereas SWITCH to SWITCHn are public or private access networks and/or switching networks or switching centres in any available current and future analogue and/or digital technologies respectively.
- whereas ISP to ISPn are service provider devices and/or computing devices and/or server devices in any available current and future analogue and/or digital technologies respectively, capable of connecting with and communicating through the internet and capable of connecting with and communicating to a public access network.
- whereas WN to WNn are wireless networks in any available current and future analogue and/or digital technologies respectively.
- whereas PAN to PANn are public access networks and/or switching networks in any available current and future analogue and/or digital technologies respectively.
- whereas IF_W, IF_W1 to IF_Wn are wireless interfaces in any available current and future analogue and/or digital technologies respectively.
- whereas IF_P, IF_P1 to IF_Pn and IF_PI, IF_PI1 to IF_PIn are wired and/or wireless interfaces in any available current and future analogue and/or digital technologies respectively in country/region and international.

2. The method of claim 1, wherein. any individual or multiple proprietary dynamic line assignment (PDLA), has build-in one or more proprietary dynamic line assignment web pages (PDLAWP).

3. The method of claim 1, wherein. any individual or multiple proprietary dynamic line assignment (PDLA) and any individual or multiple proprietary dynamic line assignment web pages (PDLAWP), may be located respectively in the same geographical location (country 1) or in a different geographical location (country 2 to country n) then the devices with whom it will interconnect and/or communicate with.

4. The method of claim 1, 2 and 3 wherein. any individual or multiple proprietary dynamic line assignment (PDLA) is capable of interfacing and communicating and processing multiple simultaneous in and/or outbound communications with any device capable of accessing the internet, such as but not limited to any individual or multiple PC, FD, WD and VoIPD, whereas each such individual PC, FD, WD and VoIPD users, authorized to use the PDLA functions, also is/are capable of establishing a call connection and/or communication with an associated SWITCH and/or ID and/or ISP call-in telephone numberings, hereinafter each such previous mentioned authorized individual PC, FD, WD and VoIPD users are collectively referred to as "PDLA users". At first of when a "PDLA user" connects to the PDLA, they will effectively interact with the PDLA through the PDLAWP and whereas each such individual or multiple PDLA is capable of interfacing and communicating and processing multiple simultaneous in and/or outbound communications with any individual or multiple "PDLA users" and with any such individual or multiple SWITCH and/or ID and/or ISP.

5. The method of claim 1, 2, 3 and 4 wherein. any individual or multiple ID, has build-in one or more PDLA, and each such PDLA with a build-in or remote PDLAWP, and whereas each such individual or multiple ID has at least one or more public access interfaces and/or internet interfaces (IF_P) and whereas each such individual or multiple ID is capable of processing multiple simultaneous in and/or outbound communications with individual or multiple "PDLA users" and individual or multiple SWITCH(es).

6. The method of claim 1, 2, 3 and 4 wherein. any individual or multiple SWITCH is capable of call forwarding and/or call diverting, hereinafter also individually or jointly referred to as call forwarding, incoming calls to its specific call-in telephone numbers, and whereas such SWITCH has at least one or more public access interfaces (IF_P) and whereas each such individual or multiple SWITCH is capable of processing multiple simultaneous in and/or outbound communications with individual or multiple PDLA(s) and multiple "PDLA users".

7. The method of claim 1, 2, 3 and 4 wherein. any individual or multiple ISP is capable of call forwarding and/or call diverting incoming calls to the call-in telephone number(s) associated to each specific user accounts, and whereas such ISP has at least one or more public access and/or internet interfaces (IF_P) and whereas each such individual or multiple ISP is capable of processing multiple simultaneous in and/or outbound communications with individual or multiple PDLA(s) and multiple "PDLA users".

8. The method of claim 5 and 6 wherein. any individual or multiple proprietary dynamic line assignment (PDLA) build-into an ID is capable of interfacing and communicating concurrently and/or simultaneously with any individual or multiple "PDLA user", through the PDLA's build-in or remotely interconnected proprietary dynamic line assignment web pages (PDLAWP), and any such PDLA capable of interfacing and communicating concurrently and/or simultaneously with any individual or multiple SWITCH, through the PDLA's single and/or multiple interface IF_P and/or IF_PI and through the PAN.
Comprising of a method for interfacing and/or interconnecting and communicating one or more PDLA, directly or through the internet, with one or more switching centre (SWITCH), whereas any such PDLA is capable of accessing the status and identity, free or occupied status of any such SWITCH call-in telephone line numbers as well as capable of setting the call forward or call divert function of each specific and corresponding SWITCH call-in telephone number, whereas:
SWITCH may be any public or private PABX/PBX System/Telephone Exchange/Telephone Switch, or any such other device capable of interconnecting and processing any such incoming calls to its specific call-in telephone numbers and routing each such incoming calls to a specific call-in telephone number to any outgoing national and international phone number, with at least call forward or call divert feature funciton for each of its individual in-coming call-in telephone lines and as well as a single or multiple interface that allows the SWITCH to interact, interconnect and communicate with an associated PDLA, whereas;
ID may be any public or private Internet Server, or any such other device capable of interconnecting and processing any such incoming requests through the internet to its specific URL (Uniform Resource Locators) or "internet web page" and routing each such incoming request to a specific PDLAWP URL "internet web page 1 to n", with at least one or more PDLA embedded or build-in, and such ID has at least a single or multiple interface that allows the ID to interact, interconnect and communicate with an associated single or multiple PDLA, PDLAWP and SWITCH, whereas;
Each time the PDLA receives through an associated PDLAWP, in example "internet web page 1", a "PDLA User" call request to a specific and unique phone number, the PDLA through the interaction and communication with the associated SWITCH will individually or jointly identify a unique "fixed associated call-in telephone line number" (FACIN) associated to a specific "PDLA User" or identify a free SWITCH call-in telephone line number "FCIN" and associate it with each such unique and specific "PDLA User" or "PDLA User" request, with an optional time out for such association in the event the association is not a fixed association of a telephone number per "PDLA User". Then the PDLA and/or SWITCH will call forward or call divert such previous mentioned "FACIN" or "FCIN" respectively to the specific and unique phone number to whom the "PDLA User" wishes to speak to. Once such PDLA User request is confirmed by the PDLA through the PDLAWP back to the specific "PDLA User" who made such call request, through in example replying with "internet web page 2", which includes, although not necessarily visible to the "PDLA User", the associated "fixed associated call-in telephone line number" (FACIN) or "free SWITCH call-in telephone line number" (FCIN) and includes also a so called "call to command", which when selecting or clicking on this "call to command" by the "PDLA User", then the Wireless Device of such "PDLA User" will automatically call to phone number "FACIN" or "FCIN", respectively as applicable, which last mentioned was previously call forwarded or call diverted to the phone number the "PDLA User" requested the call to in the first place when this process was initiated. Optionally, and only in the event that the SWITCH has not assigned and associated fixed call-in telephone numbers to specific and unique PDLA user accounts or "PDLA Users", in which case then any consecutive call request by the same or another different to the previous "PDLA User", the PDLA and/or SWITCH will not make use of the previous used "FCIN" of the SWITCH and put its identification in a first in first out register (FIFO) as to available free call-in telephone numbers thus using any other free call-in telephone number and then put this next used free call-in telephone number in line in the FIFO and so on. Also optionally after association of any free call-in telephone number by the PDLA and/or SWITCH, after a fixed or programmable time-out, the PDLA and/or SWITCH will reset or remove the call forward of call divert setting of such previous mentioned associated free call-in telephone number of the SWITCH.
Whereas any such previously mentioned single or multiple PDLA and PDLAWP, are capable of processing any such "PDLA Users" call request or call forwarding or call divert, whereas any such previously mentioned call request or call forward or call divert request being of any length of characters and as a combination of any characters, be they letters and/or numbers and/or symbols and/or any combination of the previous, but specifically and in particular capable of processing any world-wide recognised national and international telephone numbering schemes.
Say as a matter of example that an ID has a build-in PDLA, and such PDLA has a build-in PDLAWP and both previous are located in the same geography or country as the SWITCH to which the PDLA is associated and/or interconnected to.
At first one of when the PDLA receives a call request to "+123456789" from an authorised WD, through IF_W, WN, IF_P, PAN and IF_P, ID, PDLAWP "internet web page 1" respectively, interpreted by the PDLA as a call forward and/or call divert request, say from WD user referred to herein this example as "PDLA user1", more specifically a call forward request to an international phone number "+123456789", then the PDLA will connect to SWITCH and identify a free SWITCH call-in telephone line number, say for example "FCIN1" is a unique phone number identity of the identified free SWITCH call-in telephone line number, and then the PDLA will command the SWITCH to, or if applicable the PDLA will itself, set the call forward or call divert for "FCIN1" to phone number "+123456789" or "00123456789" as applicable, meaning call forward or call divert to the requested phone number the "PDLA User 1" wants to communicate with. Then once the call forward or call divert of "FCIN1" is confirmed set by the SWITCH to the PDLA, or directly by the PDLA if applicable, then the PDLA will through its associated PDLAWP communicate back to the specific "PDLA User 1" WD through a different web page reply "internet web page 2", with an acknowledgement of his request and with a so called "call to command", whereas if the WD user "PDLA User 1" clicks on such "call to command" link, the WD will automatically start dialling and connecting to such unique and specifically, associated to his specific call request, free SWITCH call-in telephone line number "FCIN1", which is call forwarded or call diverted to the phone number the WD user "PDLA User 1" requested to connect and communicate with.

9. The method of claim 5 and 7 wherein. any individual or multiple proprietary dynamic line assignment (PDLA) build-into an ID is capable of interfacing and communicating concurrently and/or simultaneously with any individual or multiple "PDLA user", through the PDLA's build-in or remotely interconnected proprietary dynamic line assignment web pages (PDLAWP), and any such PDLA capable of interfacing and communicating concurrently and/or simultaneously with any individual or multiple ISP, through the PDLA's single and/or multiple interface IF_P and/or IF_PI and through the PAN.
Comprising of a method for interfacing and/or interconnecting and communicating one or more PDLA, directly or through the internet, with one or more internet service provider (ISP), whereas any such PDLA is capable of accessing the status, free or occupied status of any such ISP call-in telephone line numbers, and/or any such PDLA is capable of accessing the identity of any such ISP specific and unique call-in telephone line numbers associated temporarily or permanently to any such ISP specific and unique user accounts, as well any such PDLA is capable of accessing and setting the call forward or call divert function of each specific and corresponding ISP specific and unique user accounts, meaning call forwarding or call diverting any incoming call to such specific and unique user account "call-in telephone number" and/or any incoming call to such specific and unique user account voice over internet protocol user name "VOIPUN", whereas:
ISP may be any public or private Internet Server, with or without a build-in or associated private or public PABX/PBX System/Telephone Exchange/Telephone Switch, or any such other device capable of interconnecting and processing any such incoming calls to each of its specific and unique "call-in telephone numbers" and/or each of its specific and unique "user account voice over internet protocol user names", jointly hereinafter referred to "VOIP User", and capable of routing each such incoming calls to any outgoing national and international phone number and/or to any such other different to the previous mentoned ISP specific and unique "user account voice over internet protocol user name", whereas each such previously mentioned ISP being capable of at least call forward or call divert feature funciton for each of its individual "VOIP User" and as well as a single or multiple interface that allows the ISP to interact, interconnect and communicate with an associated PDLA, whereas;
PDLA may be embedded into previous mentioned ISP or any such other different ISP or any such other yet differnet ID or any public or private Internet Server, or any such other device capable of interconnecting and processing any such incoming requests through the internet to its specific URL (Uniform Resource Locators) or "internet web page" and routing each such incoming request to a specific PDLAWP URL "internet web page I to n", and such PDLA has at least a single or multiple interface, through the internet device in which it is embedded into, to interact, interconnect and communicate with an associated single or multiple PDLAWP, ID and ISP, whereas;
Any such previously mentioned single or multiple PDLA and PDLAWP, are capable of processing any such "authorised PDLA user" or "PDLA Users" call request or call forwarding or call divert request, whereas any such previously mentioned call request or call forward or call divert request being of any length of characters and as a combination of any characters, be they letters and/or numbers and/or symbols and/or any combination of the previous, but specifically and in particular capable of processing any world-wide recognised national and international telephone numbering schemes and capable of processing voice over internet protocol user names.
Each time the PDLA receives through an associated PDLAWP, in example "internet web page 1", a "PDLA User" call request to a "specific and unique telephone number" (SUPN) or "specific and unique voice over internet protocol user name" (SUVOIPUN"), the PDLA through the interaction and communication with the associated ISP will individually or jointly identify a unique and specifically associated "fixed associated call-in telephone line number" (FACIN) associated to a specific "VOIP User" or identify a free ISP call-in telephone line number "FCIN" and associate it with each such unique and specific "VOIP User" and "PDLA User" request, with an optional time out for such association. Then the PDLA and/or ISP will call forward or call divert such previous mentioned "VOIP User" to the specific and unique phone number to whom the "PDLA User" wishes to speak to. Once such "PDLA User" request is confirmed by the PDLA through the PDLAWP back to the specific "PDLA User" who made such call request, through in example replying with "internet web page 2", which includes, although not necessarily visible to the "PDLA User", the associated previously mentioned "fixed associated call-in telephone line number" (FACIN) or free ISP call-in telephone line number "FCIN" and a so called "call to command", which when selecting or clicking on this "call to command" by the "PDLA User", then the Wireless Device of such "PDLA User" will automatically call to phone number "FACIN" or "FCIN" respectively which was associated to the specific "VOIP User" which was previously call forwarded or call diverted to the "specific and unique telephone number" (SUPN) or "specific and unique voice over internet protocol user name" (SUVOIPUN") the "PDLA User" requested the call to in the first place when this process was initiated. Optionally, and only in the event that the ISP has not assigned and associated fixed call-in telephone numbers to specific and unique user accounts or voice over internet protocol user names, in which case then any consecutive call request by the same or another different to the previous "PDLA User", the PDLA and/or ISP will not make use of the previous used "FCIN" of the SWITCH and put its identification in a first in first out register (FIFO) as to available free call-in telephone numbers thus using any other free call-in telephone number and then put this next used free call-in telephone number in line in the FIFO and so on. Also optionally after association of any free call-in telephone number by the PDLA and/or ISP, after a fixed or programmable time-out, the PDLA and/or ISP will reset or remove the call forward of call divert setting of each such previous mentioned associated free call-in telephone number or user account or voice over internet protocol user name of the ISP.

10. The method of claim 9 wherein. any individual or multiple ISP user accounts, in example (i.e.) "VOIP User1" of ISPI, has at least one or more call-in telephone numbers of different geographies or countries, thus allowing each corresponding "PDLA user" (i.e. "PDLA user1") to call any "VoIP user" of each of the corresponding ISP from those different geographies or countries by the "PDLA User" i.e. a wireless device user calling a call-in telephone number in the same country for the cost of a standard voice call rate applicable to the calling device, i.e. "WD1" who imitates such call to the corresponding country call-in telephone number associated to the "VOIP User1" of ISP1 plus the internet or voice over internet protocol (VoIP) or general packet radio service (GPRS) data call for such call request from such WD1 to PDLAWP/PDLA..

11. The method of claim 9 wherein. any individual or multiple ISP user accounts, in example (i.e.) "VOIP User1" of ISP1, has at least one or more call-out telephone service capable of calling any telephone number of any region, geographies or countries, thus allowing each corresponding "PDLA user" (i.e. "PDLA userl") to call any telephone number by means of a call forwarding setting by i.e. the "PDLA user1", through the PDLAWP/PDLA and then through the corresponding ISP, of i.e. the corresponding "VOIP User1" of ISP1.

12. The method of claim 1,2, 8, 9, 10 and 11 wherein any individual or multiple PDLA, or parts of it, is capable of communicating, through the internet or VoIP or session initiation protocol (SIP) or signalling system 7 (SS7) or E1 or ISDN or ADSL or DSL or X25 or any such other means of communications link and/or protocol (IF_P or IF_PI), between or with yet another PDLA, or parts of it, whereas such last mentioned PDLA, or parts of it, is different to the first mentioned in this claim and whereas any of the PDLA mentioned in this claim, or parts thereof, may be located in any ID, ISP, PAN, WN, SWITCH, VoIPD or PC, based in any location in the world, whereas each remainder PDLA part may be located in yet a different to the previous ID, ISP, PAN, WN, SWITCH, VoIPD or PC based in the same region or country then the first mentioned or in a different region or country, and whereas any such parts of any individual or multiple PDLA and/or PDLAWP functions is/are capable to connect and communicate with the corresponding remaining parts of each corresponding PDLA and/or PDLAWP.

13. The method of claim 1,2, 8, 9, 10, 11 and 12 wherein any individual or multiple PDLA and/or PDLAWP has build-in a tools o settings menu, wherein the "PDLA User" can access an internet web page, different to all the previous mentioned herein, i.e. "Internet web page 3", wherein the "PDLA User" can enter and modify any available parameter settings and other features, such as but not limited to: access his individual and "PDLA User" specific agenda with associating agenda names and telephone numbers and VOIP user names, call forward or call divert setting, prepay his specific PDLA user account through a build-in credit card clearance available within the PDLA and accessible through the PDLAWP, download a software client in example for a specific handset or PC, change the call-in telephone number in the event of fixed numbering for each country the PDLA User will call from.
